# EUROPÄISCHE PATENTSCHRIFT

(11) **EP 3 893 001 B1**
(45) Veröffentlichungstag und Bekanntmachung des Hinweises auf die Patenterteilung: **13.12.2023**
(21) Anmeldenummer: 21164027.1
(22) Anmeldetag: 22.03.2021
(51) Int. Cl.: G01N 35/04, G01N 35/10, B08B 1/00, B08B 9/043, B08B 9/049, B08B 9/28, B08B 9/34, B08B 9/093

(54) **VORRICHTUNG UND VERFAHREN ZUR REINIGUNG VON GEFÄSSEN**
METHOD AND DEVICE FOR CLEANING VESSELS
DISPOSITIF ET PROCÉDÉ DE NETTOYAGE DE RÉSERVOIRS

(30) Priorität: 23.03.2020 DE 102020107864
(43) Veröffentlichungstag der Anmeldung: 13.10.2021
(73) Patentinhaber: Amfomed Ag, 4123 Allschwil (CH)
(72) Erfinder: MARCHAND, Claude, 4434 Hölstein (CH)
(74) Vertreter: Manitz Finsterwald Patent- und Rechtsanwaltspartnerschaft mbB

(56) Entgegenhaltungen:
- CH-A2- 704 093
- JP-A- S 646 760
- US-A- 4 341 568

## Beschreibung

Die vorliegende Erfindung betrifft eine Vorrichtung und ein Verfahren zur Reinigung von Gefäßen.

Zum Beispiel im Laborbetrieb werden verschiedene Arten von Gefäßen, wie etwa Flaschen, Laborgläser oder Reagenzgläser manuell oder über unterschiedlichste Vorrichtungen, wie etwa Flüssigkeitshandhabungsvorrichtungen, sogenannte "Liquid Handling Devices", an Chromatographen oder anderen Analysegeräten, mit diversen Flüssigkeiten befüllt, die beliebige Chemikalien sein können. Solche Flüssigkeiten können beispielsweise als Fraktionen an einem Chromatographen anfallen, welche zum Beispiel in Laborgläsern in einem Rack gesammelt werden. An irgendeinem Punkt bei der Verarbeitung der abgefüllten Flüssigkeiten sind diese sogenannter "Waste", der schließlich zu entsorgen ist.

Dies geschieht zum einen manuell, indem vom Laboranten das betreffende Laborgefäß aus dem Rack entnommen in einen Ausguss, der sich gewöhnlich unter einem Laborabzug befindet, ausgeleert wird. Anschließend wird das Laborgefäß in eine Spülmaschine verbracht und mit der Öffnung nach unten maschinell gereinigt. Die manuelle Handhabung von mit Flüssigkeiten gefüllten Laborgefäßen birgt gewisse Risiken. Die im Laborgefäß befindliche Substanz kann bei einem versehentlichen Entleeren oder Fallenlassen des Laborgefäßes freigesetzt werden und je nach ihrer Beschaffenheit die Gesundheit des Laboranten gefährden, zumindest aber das Umfeld verschmutzen und auch benachbarte Laborgefäße mit Flüssigkeiten, die erhalten bleiben sollten, verunreinigen.

Für große Mengen zu handhabender Laborgefäße ist die manuelle Entnahme der Laborgefäße ohnehin zu aufwendig und damit zu kostspielig.

Die Entsorgung von in Laborgefäßen befindlichen Flüssigkeiten kann und soll auch automatisiert stattfinden. Beispielsweise sind Roboter grundsätzlich dafür geeignet, Laborgefäße aus ihren Racks zu entnehmen, an einem geeigneten Ort durch Umdrehen zu entleeren und sie einzeln oder als Racks zusammengefasst einer Spülmaschine umgedreht mit der Öffnung nach unten zuzuführen, um sie dort einem maschinellen Spülvorgang zu unterziehen.

Jedoch ist auch die automatisierte Handhabung von Laborgefäßen über Roboter nicht frei von Risiken. Kollisionen können zum Beispiel dazu führen, dass der Inhalt aus Laborgefäßen austreten und Verschmutzungen herbeiführen kann. Auch können unvorhersehbare Ereignisse, wie etwa Stromausfälle, zu Situationen führen, in welchen möglicherweise gefährliche Substanzen unkontrolliert austreten oder die die Substanzen enthaltenden Laborgefäße nur schlecht wieder in den Griff zu bekommen sind, weil sie sich möglicherweise am Roboterarm in einer ungünstigen Entnahmeposition befinden.

Es sind daher Vorrichtungen und Verfahren erwünscht, die die Handhabung von Gefäßen, insbesondere Laborgefäßen samt der ihn Ihnen enthaltenen und zu entsorgenden Flüssigkeiten sicherer gestalten, für große anfallende Mengen von Gefäßen geeignet sind und darüber hinaus kostengünstig zu realisieren sind.

Die US 4 341 568 A offenbart eine Vorrichtung zur Reinigung eines in einer Aufnahme eingebrachten Objekts. Es ist ein Spülrohr und ein konzentrisch in diesem angeordnetes Saugrohr vorgesehen. Über das Spülrohr wird Reinigungsflüssigkeit zu einem Wandungsbereich der Aufnahme geleitet und von dort um das Objekt herum gelenkt. Das Saugrohr saugt die Reinigungsflüssigkeit an einer Stelle oberhalb des zu reinigenden Objekts ab. Das Spülrohr und das Saugrohr sind fest miteinander verbunden.

Aus der CH 704 093 A2 ist eine Vorrichtung zum Reinigen von Weinfässern bekannt, die eine Sauglanze und einer Spüllanze aufweist, die sich in einer Längsrichtung erstrecken. Die Sauglanze weist ein Saugrohr mit einem offenen Saugende auf, das über einen in dem Saugrohr durchgängig ausgebildeten Saugkanal mit einem entgegengesetzt zum Saugende angeordneten Entsorgungsanschlussende verbunden ist, wobei die Sauglanze dazu ausgebildet ist, an ihrem Saugende Fluid aus einem Gefäß, insbesondere einem Weinfass, entgegen der Wirkungsrichtung der Schwerkraft, abzusaugen und an ihrem Entsorgungsanschlussende abzuführen. Die Spüllanze weist ein Spülrohr mit einem Spülende aufweist, das über einen in dem Spülrohr durchgängig ausgebildeten Spülkanal mit einem entgegengesetzt zum Spülende angeordneten Versorgungsanschlussende verbunden ist, wobei die Spüllanze dazu ausgebildet ist, an ihrem Versorgungsanschlussende Wasser aufzunehmen, und an ihrem Spülende auszustoßen. Das Spülende und das Absaugende sind in einem festen Abstand angeordnet.

Die JP S64 6760 A offenbart eine Vorrichtung gemäß dem Oberbegriff des Anspruchs 1.

Es ist die Aufgabe der vorliegenden Erfindung, Vorrichtungen und Verfahren bereitzustellen, mittels derer die Spülung von Gefäßen, insbesondere Laborgefäßen homogener möglich ist, als im Stand der Technik derzeit bekannt ist.

Diese Aufgabe wird durch eine Gefäß-Reinigungsvorrichtung nach Anspruch 1, Anordnungen nach Anspruch 11 und 12, sowie ein Gefäß-Reinigungsverfahren nach Anspruch 13 und ein Gefäß-Trocknungsverfahren nach Anspruch 14 gelöst.

Weitere vorteilhafte Ausführungsformen sind in den Unteransprüchen angegeben.

Erfindungsgemäß ist eine Gefäß-Reinigungsvorrichtung, insbesondere Laborgefäß-Reinigungsvorrichtung mit einer Sauglanze und einer Spüllanze vorgesehen, die sich in einer Längsrichtung erstrecken, wobei die Sauglanze ein Saugrohr mit einem offenen Saugende aufweist, das über einen in dem Saugrohr durchgängig ausgebildeten Saugkanal mit einem entgegengesetzt zum Saugende angeordneten Entsorgungsanschlussende verbunden ist, wobei die Sauglanze dazu ausgebildet ist, an ihrem Saugende Fluid aus einem Gefäß, insbesondere Laborgefäß, vorzugsweise entgegen der Wirkungsrichtung der Schwerkraft, abzusaugen und an ihrem Entsorgungsanschlussende abzuführen, wobei die Spüllanze ein Spülrohr mit einem Spülende aufweist, das über einen in dem Spülrohr durchgängig ausgebildeten Spülkanal mit einem entgegengesetzt zum Spülende angeordneten Versorgungsanschlussende verbunden ist, wobei die Spüllanze dazu ausgebildet ist, an ihrem Versorgungsanschlussende Fluid, wie etwa Reinigungsflüssigkeit und/oder Druckluft, aufzunehmen, und an ihrem Spülende auszustoßen. Die Sauglanze und die Spüllanze sind relativ zueinander in Längsrichtung verschiebbar und durch eine Vorspannfeder in Längsrichtung voneinander weg vorgespannt. Auf diese Weise kann sichergestellt werden, dass beim Einführen der Spüllanze und der Sauglanze in das Gefäß bis zum Boden des Gefäßes die Sauglanze nur sanft mit dem Boden in Kontakt gelangt nicht hart auf diesen aufsetzt. Die Sauglanze ist über ihr Entsorgungsanschlussende an ein unter Unterdruck gesetztes Entsorgungssystem für Chemikalien bzw. belastetes Abwasser anschließbar. Das Versorgungsanschlussende ist mit einem Versorgungssystem für Reinigungsflüssigkeit verbindbar, welches beispielsweise über eine Pumpe eine ausgewählte Reinigungsflüssigkeit zuführt.

Die erfindungsgemäße Vorrichtung macht es möglich, Flüssigkeiten aus einem Gefäß, insbesondere einem Laborgefäß in seiner normalen Gebrauchslage, d.h. mit oben befindlicher Öffnung und am Grund gesammelter Flüssigkeit zu entsorgen, ohne das Gefäß zum Beispiel aus einem Rack entnehmen zu müssen. Direkt im Anschluss daran kann über die gleiche Vorrichtung das Gefäß mit einer Reinigungsflüssigkeit gespült, d. h. gewaschen werden, wobei die Reinigungsflüssigkeit schon während des Reinigungsvorgangs aus dem Gefäß abgesaugt und abgeleitet wird, um diese entweder zu entsorgen oder wieder aufzubereiten. Das Gefäß muss dazu nicht notwendigerweise absolut senkrecht stehen, auch eine gewisse Schrägstellung ist möglich, wenn die Reinigungsvorrichtung entsprechend schräg gestellt wird.

In einer Weiterbildung der erfindungsgemäßen Vorrichtung ist das Saugrohr konzentrisch und beabstandet in dem Spülrohr angeordnet. Damit ergibt sich ein besonders kompakter Aufbau der Reinigungsvorrichtung, wobei die Reinigungsflüssigkeit an der Wandung des gereinigten Gefäßes herunterläuft und mittig am Grund des Gefäßes abgesaugt wird.

In einer weiteren Ausführungsform der erfindungsgemäßen Vorrichtung weist die Spüllanze einen Spülkopf am Spülende des Spülrohrs auf, in welchem sich der Spülkanal unter einer Richtungsveränderung von der Längsrichtung weg als Spülkopfkanal erstreckt und an einem Außenumfang des Spülkopfes an einer vorzugsweise als Düse ausgebildeten Spülöffnung ausmündet. Der derart ausgebildete Sprühkopf ermöglicht es, die Reinigungsflüssigkeit gezielt zu den vertikalen Seitenwänden des Gefäßes umzulenken und damit die Reinigungswirkung zu verbessern.

In einer Weiterbildung der erfindungsgemäßen Vorrichtung ist der Spülkopf polygonförmig, insbesondere sternförmig ausgebildet, und die vorzugsweise als Düse ausgebildete Spülöffnung ist in einem äußeren Randbereich radial innen von dem Außenumfang des polygonförmig, insbesondere sternförmig ausgebildeten Spülkopfes angeordnet. Diese Ausbildung des Sprühkopfes ermöglicht einen günstigen Austritt des Spülstrahls aus dem Spülkopf in Richtung der Gefäßinnenwände, was zu einer besseren Reinigungswirkung beiträgt.

In einer nochmals weiteren Ausführungsform der erfindungsgemäßen Vorrichtung verzweigt sich der Spülkanal in dem Spülkopf in zumindest zwei Spülkopfkanäle, der am Außenumfang des Spülkopfes an einer zugehörigen Spülöffnung, vorzugsweise zwölf Spülöffnungen, ausmündet. Die zusätzlichen Spülöffnungen sorgen dafür, dass die Reinigungsflüssigkeit besser auf die vertikalen Seitenwände des Gefäßes verteilt wird, wodurch die Reinigungswirkung weiter gesteigert wird.

In einer abermals weiteren Ausführungsform der erfindungsgemäßen Vorrichtung ist an dem Außenumfang des Spülkopfes eine Ausformung, vorzugsweise eine radiale Ausnehmung vorgesehen, in welcher der Spülkopfkanal ausmündet. Diese Ausbildung des Austrittsendes des Spülkopfkanals am Außenumfang des Spülkopfes sorgt dafür, dass die Reinigungsflüssigkeit nicht nur radial auf die vertikalen Seitenwände des Gefäßes trifft, sondern auch mit einem gewissen tangentialen Anteil, was wiederum die Reinigungswirkung erhöht.

Als vorteilhaft hat es sich erwiesen, wenn in einer weiteren Ausführungsform der erfindungsgemäßen Vorrichtung der Spülkopf drehbar ist, vorzugsweise an dem Spülrohr drehbar befestigt ist. Den Spülkopf drehbar zu gestalten, bietet die Möglichkeit, dessen Reinigungswirkung weiter zu steigern.

Dies gilt insbesondere, wenn in einer weiteren Ausführungsform der Spülkopf drehbar angetrieben ist.

Eine besonders günstige Variante des drehbaren Antriebs liegt dann vor, wenn der Spülkopfkanal aus dem Spülkopf unter einem Winkel, vorzugsweise einem Winkel von etwa 90 Grad, zur Radiallinie des Spülkopfes ausmündet und der Spülkopf durch Rückstoß austretenden Fluids in Drehung versetzt wird. Dann wird der Spülkopf allein durch das austretende Fluid umlaufen gelassen, ohne dass ein zusätzlicher Antrieb erforderlich ist, und die Reinigungswirkung wird entsprechend erhöht.

In einer Ausführungsvariante des drehbaren Spülkopfes ist dieser an dem Spülrohr durch Dichtungen drehbar gelagert, wobei vorzugsweise ein Spiel zwischen Dichtung und Spülrohr oder Dichtung und Spülkopf besteht. Dies stellt eine besonders günstige Form der Lagerung des Spülkopfes an dem Spülrohr dar, die einerseits gewährleistet, dass der Spülkopf mit geringem Reibungswiderstand auf dem Spülrohr rotiert, und andererseits eine aufwändigere Lagerung unnötig macht. Es reicht aus, wenn die Dichtungen in leichtem Kontakt mit dem Spülrohr und/oder mit dem Spülkopf stehen. Eine gewisse Undichtigkeit zwischen Spülkopf und Spülrohr ist völlig unschädlich, da hier nur Reinigungsflüssigkeit austritt, welche schmiert und auch bei der Reinigung mitwirkt und ebenso wie das aus dem Spülkanal austretende Fluid letztendlich abgesaugt wird.

In einer Variante der erfindungsgemäßen Vorrichtung ist das von der Spüllanze ausgestoßene Fluid Luft, so dass die Gefäß-Reinigungsvorrichtung auch als Trocknungsvorrichtung dient. Indem die Versorgung der Sprühlanze von Reinigungsflüssigkeit auf Druckluft umgestellt wird, kann auf einfache Weise auch eine Trocknungsfunktion für das Gefäß etwa im Anschluss an eine Reinigung vor Ort zum Beispiel auf dem Rack realisiert werden.

In einer Weiterbildung der erfindungsgemäßen Vorrichtung ist das Saugende des Saugrohrs nicht plan, vorzugsweise konkav, konvex oder abgeschrägt ausgebildet. Die Ausgestaltung des Endes des Saugrohrs auf nicht plane Weise gewährleistet, dass auch bei einem bombierten Boden des Gefäßes bei am Boden aufsitzender Spüllanze die Absaugöffnung frei bleibt, sodass die im Gefäß befindliche Flüssigkeit zuverlässig abgesaugt werden kann.

Die erfindungsgemäße Reinigungsvorrichtung kann erweitert werden, indem im Bereich des Spülendes der Spüllanze eine mechanische Reinigungsvorrichtung, wie etwa eine Bürste, vorgesehen ist. Damit können auch hartnäckige, auskristallisierte Ablagerungen an Gefäßwänden gelöst und anschließen abgewaschen werden.

Erfindungsgemäß ist auch eine Anordnung aus einer oder mehreren Gefäß-Reinigungsvorrichtungen gemäß der Vorrichtungsansprüche, insbesondere Laborgefäß-Reinigungsvorrichtungen an einem Arbeitskopf einer Flüssigkeitshandhabungsvorrichtung zur parallelen Reinigung und/oder Trocknung mehrerer, insbesondere in Racks vorgesehener Gefä-βe, insbesondere Laborgefäße vorgesehen. Indem mehrere Flüssigkeitshandhabungsvorrichtungen an einem Arbeitskopf einer Flüssigkeitshandhabungsvorrichtung vorgesehen sind, kann ein ohnehin vorhandenes Handhabungssystem auch dazu benutzt werden, die Gefäß-Reinigungsvorrichtungen nach Bedarf zu verfahren und zu positionieren. Die Absaug- und Spülleistung wird durch die mehreren eingesetzten Vorrichtungen gegenüber der Verwendung einer einzigen deutlich erhöht.

Erfindungsgemäß ist auch vorgesehen, dass eine Anordnung aus einer oder mehreren Gefäß-Reinigungsvorrichtungen gemäß der Vorrichtungsansprüche, insbesondere Laborgefäß-Reinigungsvorrichtungen an einer spezifischen Reinigungsstation zur parallelen Reinigung und/oder Trocknung mehrerer, insbesondere in Racks vorgesehener Gefäße, insbesondere Laborgefäße gebildet ist. Auf diese Weise ist eine eigene Station gezielt zu dem Zweck geschaffen, von separaten Geräten, insbesondere Laborgeräten zugeführte Gefäße, insbesondere Laborgefäße zu reinigen und/oder zu trocknen und dabei die Nachteile herkömmlicher Spülmaschinen zu vermeiden, die eine Entnahme und ein Umdrehen der jeweils zu reinigenden Gefäße erfordern. Die spezifische Reinigungsstation kann separat zu jedem gewünschten Gerät hinzugefügt und als eigene Anlage hergestellt und vertrieben werden.

Gemäß der vorliegenden Erfindung ist auch ein Gefäß-Reinigungsverfahren, insbesondere Laborgefäß-Reinigungsverfahren, mittels einer Gefäß-Reinigungsvorrichtung gemäß der Vorrichtungsansprüche, insbesondere Laborgefäß-Reinigungsvorrichtung mit den folgenden Schritten vorgesehen:
Einführen der Sauglanze in ein zu reinigendes Gefäß, insbesondere Laborgefäß, gegebenenfalls Absaugen in dem Gefäß vorhandener Flüssigkeiten aus dem Gefäß über die Sauglanze, vorzugsweise entgegen der Wirkung der Schwerkraft, Einführen der Spüllanze in das zu reinigende Gefäß gleichzeitig oder im Anschluss an das Einführen der Sauglanze,
Zuführen einer Reinigungsflüssigkeit durch die Spüllanze, so dass sie zumindest gegen vertikale Innenwände des Gefäßes ausgestoßen wird, und gleichzeitig vertikales Verfahren zumindest der Spüllanze innerhalb des Gefäßes und Absaugen der sich im Gefäß unten sammelnden Reinigungsflüssigkeit über die Sauglanze, vorzugsweise entgegen der Wirkung der Schwerkraft.

Dieses Reinigungsverfahren ersetzt die bisherigen Vorgehensweisen, um mit Flüssigkeiten befüllte Gefäße, insbesondere Laborgefäße manuell oder maschinell von dem entsprechenden Gerät, insbesondere Laborgerät zu entnehmen, an eine Entsorgungsstation zu verbringen, dort umzudrehen und zu entleeren und anschließend weiter in eine Spülmaschine zu verbringen und sie dort letztlich zu reinigen. Das vorliegende Verfahren gestattet das Entleeren und Reinigen von Gefä-βen, insbesondere Laborgefäßen im Bereich des Geräts, insbesondere Laborgeräts, in welchem sie befüllt wurden an ein und demselben Ort in zwei aufeinanderfolgenden Arbeitsgängen, ohne überhaupt ein Gefäß berühren oder gar umdrehen zu müssen. Die erfindungsgemäße Vorgehensweise ist damit sicher insbesondere für Laboranten, wenig fehleranfällig und äußerst wirtschaftlich.

In einer Ausführungsform des erfindungsgemäßen Verfahrens wird der zusätzliche Schritt eines Drehens des Spülkopfes der Spüllanze innerhalb des Gefäßes relativ zu dem Gefäß ausgeführt, wodurch die Reinigungsleistung verbessert wird.

In einer Ausführungsform des erfindungsgemäßen Verfahrens werden zusätzlich folgende Schritte ausgeführt: Mehrmaliges vertikales Anheben und Absenken zumindest der Spüllanze innerhalb des Gefäßes bis zum Erreichen eines gewünschten Reinheitsgrades des Gefäßes. Je nach vom Kunden oder Anwender gewünschtem Reinheitsgrad des Gefäßes und abhängig von der zunächst im Gefäß befindlichen Flüssigkeit kann festgelegt werden, wie oft die Spüllanze in diesem Gefäß im Spülbetrieb angehoben und abgesenkt wird und entsprechend die anfallende kontaminierte Reinigungsflüssigkeit abgesaugt wird. Versuche haben gezeigt, dass schon drei Spüldurchläufe ausreichen, um eine hohe Reinigungsqualität zu erreichen, die anspruchsvollen Anforderungen gerecht wird.

Es hat sich als vorteilhaft erwiesen, wenn mittels der erfindungsgemäßen Gefäß-Reinigungsvorrichtung auch ein Gefäß-Trocknungsverfahren, insbesondere Laborgefäß-Trocknungsverfahren mit den folgenden Schritten ausgeführt wird: Einführen der Spüllanze und der Sauglanze in ein zu trocknendes Gefäß, insbesondere Laborgefäß oder Belassen der Spüllanze und der Sauglanze in einem gerade gereinigten Gefäß, insbesondere Laborgefäß,
Zuführen von Luft durch die Spüllanze, so dass die Luft zumindest gegen vertikale Innenwände des Gefäßes ausgestoßen wird, und gleichzeitig, optional mehrmaliges, vertikales Anheben und Absenken zumindest der Spüllanze innerhalb des Gefäßes und optional Absaugen von sich gegebenenfalls im Gefäß unten befindlicher Flüssigkeit über die Sauglanze, vorzugsweise entgegen der Wirkung der Schwerkraft.

Damit wird es beispielsweise möglich, an dem Ort, an dem die Reinigung des Gefäßes durchgeführt wurde, zusätzlich eine Trocknung des Gefäßes vorzunehmen, da durch die durch die Spüllanze zugeführte Druckluft die Verdampfung von Reinigungsflüssigkeitsresten beschleunigt wird und das Gefäß entsprechend schneller erneut befüllt werden kann.

Bezüglich der für die Spüllanze und die Sauglanze verwendeten Materialien ist festzustellen, dass der Fachmann diese entsprechend der zu entsorgenden im Gefäß befindlichen Substanzen wählen wird, um eine Korrosion oder Zersetzung oder anderweitige chemische Reaktion der verwendeten Materialien mit den betreffenden Substanzen zu vermeiden. Geeignete Materialien können zum Beispiel Edelstahl aber auch unterschiedliche Kunststoffe, wie etwa PEEK sein. Das Saugrohr und das Spülrohr sind bevorzugt nicht zu stark ausgebildet, sodass diese gegebenenfalls bei Kontakt mit dem zu reinigenden Gefäß etwas nachgeben, sodass weder die Gefäß-Reinigungsvorrichtung noch das Gefäß beschädigt wird.

Die verwendete Reinigungsflüssigkeit wird so ausgesucht, dass einerseits eine gute Reinigungswirkung erzielt wird und andererseits eine unerwünschte Reaktion mit im Gefäß verbliebenen Substanzen vermieden wird. Infrage kommen als Reinigungsflüssigkeit beispielsweise Alkohol, Aceton oder eventuell auch nur destilliertes Wasser.

Der Anschluss des Versorgungsanschlussendes mit einem Schlauch des Versorgungsystems für Reinigungsflüssigkeit und der Anschluss des Entsorgungsanschlussendes mit einem Schlauch des Entsorgungssystems kann über herkömmliche im Betrieb, insbesondere im Laborbetrieb verwendete Verschraubungen oder dgl. erfolgen.

Die Halterung der Gefäß-Reinigungsvorrichtung an einem zugehörigen Arbeitskopf beispielsweise einer Flüssigkeitshandhabungsvorrichtung kann auf beliebige Weise erfolgen, vorzugsweise unter Ausnutzung der ohnehin an dem Arbeitskopf vorgesehenen Aufnahme.

Die Erfindung wird im Folgenden beispielhaft anhand der Zeichnungen beschrieben; in diesen zeigt:
- Fig. 1A: eine dreidimensionale Darstellung einer erfindungsgemäßen, als Laborgefäß-Reinigungsvorrichtung ausgeführten Gefäß-Reinigungsvorrichtung in einem Zustand mit ausgefahrenem Saugrohr;
- Fig. 1B: eine dreidimensionale Darstellung der Laborgefäß-Reinigungsvorrichtung von Fig. 1A in einem Zustand mit eingezogenem Saugrohr;
- Fig. 2: eine Längsschnittansicht der Laborgefäß-Reinigungsvorrichtung von Fig. 1A;
- Fig. 3: eine dreidimensionale Darstellung eines Spülkopfes der Laborgefäß-Reinigungsvorrichtung von Fig. 1A; und
- Fig. 4A: eine Draufsicht des Spülkopfes der Laborgefäß-Reinigungsvorrichtung von Fig. 1A;
- Fig. 4B: eine Seitenansicht des Spülkopfes der Laborgefäß-Reinigungsvorrichtung von Fig. 1A;
- Fig. 4C: eine Schnittansicht des Spülkopfes der Laborgefäß-Reinigungsvorrichtung von Fig. 1 entlang der Linie D-D von Fig. 4A;
- Fig. 5A, 5B, 5C: schematische Darstellungen von alternativen Spülköpfen gemäß der vorliegenden Erfindung.

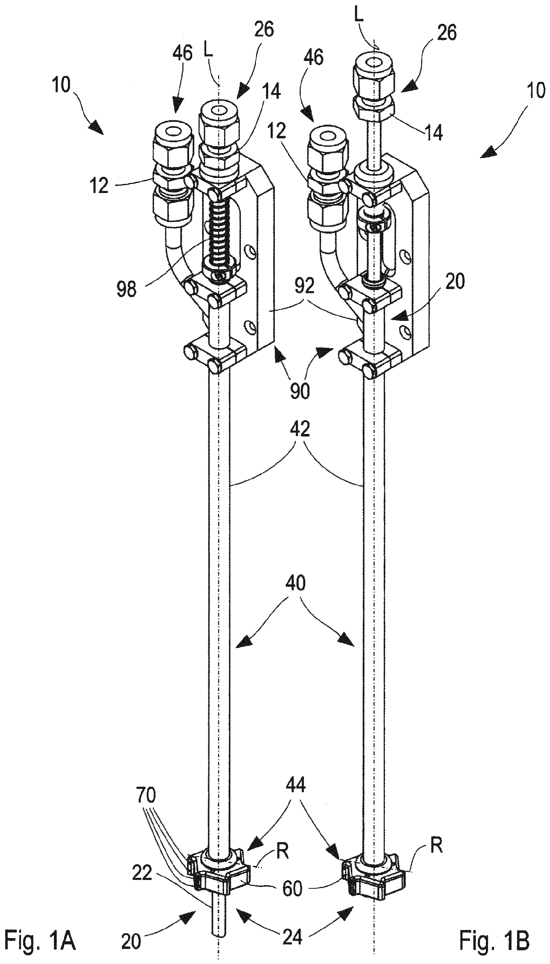

Die Fig. 1A und 1B zeigen jeweils eine dreidimensionale Darstellung einer Laborgefäß-Reinigungsvorrichtung 10, als bevorzugte Ausführungsform einer erfindungsgemäßen Gefäß-Reinigungsvorrichtung in unterschiedlichen Betriebsstellungen. Wie es in Fig. 1A gezeigt ist, weist die Laborgefäß-Reinigungsvorrichtung 10 eine Sauglanze 20 und eine Spüllanze 40 auf. Die Sauglanze 20 weist ein Saugrohr 22 mit einem offenen Saugende 24 und einem entgegengesetzt zum Saugende 24 angeordneten Entsorgungsanschlussende 26 auf, an welchem eine Verschraubung 14 zum Anschluss an einen nicht dargestellten Schlauch vorgesehen ist, der zu einem nicht dargestellten Entsorgungssystem führt. Die Spüllanze 40 weist ein Spülrohr 42 mit einem Spülende 44 und einem entgegengesetzt zum Spülende 44 angeordneten Versorgungsanschlussende 46 auf, an welchem eine Verschraubung 12 zum Anschluss an einen nicht dargestellten Schlauch vorgesehen ist, der von einem nicht dargestellten Reinigungsflüssigkeits-Versorgungssystems oder alternativ von einer Druckluftquelle kommt. Am Spülende 44 der Spüllanze 40 ist ein Spülkopf 60 um das Spülrohr 42 herum drehbar befestigt. Das Saugrohr 22 ist konzentrisch und beabstandet in dem Spülrohr 42 angeordnet.

Die Sauglanze 20 ist dazu ausgebildet, an ihrem Saugende 24 Fluid aus einem nicht dargestellten Laborgefäß, vorzugsweise entgegen der Wirkungsrichtung der Schwerkraft, abzusaugen und an ihrem Entsorgungsanschlussende 26 zu dem Entsorgungssystem abzuführen.

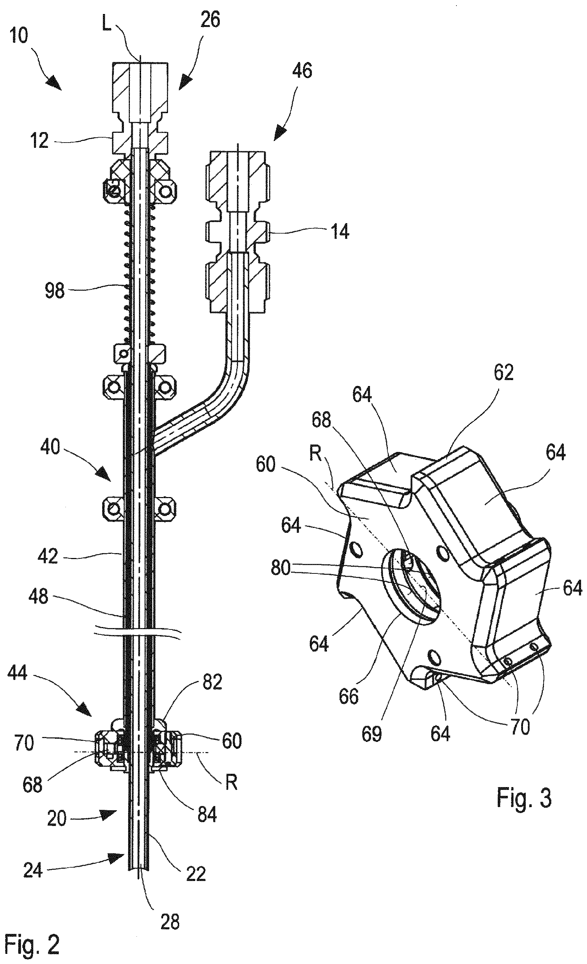

In Längsrichtung durch das Saugrohr 22 hindurch verläuft von dem Entsorgungsanschlussende 26 aus ein Saugkanal 28 (in Fig. 2 gezeigt), der sich am Saugende 24 nach außen öffnet.

Die Spüllanze 40 ist dazu ausgebildet, an ihrem Versorgungsanschlussende 46 Fluid, wie etwa Reinigungsflüssigkeit und/oder Druckluft, aufzunehmen, und an ihren Spülöffnungen 70 unter etwa 90 Grad zur Längsrichtung L und unter etwa 90 Grad zur Radiusrichtung R, also in etwa tangentialer Richtung der zu Innenwand des zu reinigenden, nicht dargestellten Laborgefäßes auszustoßen. Andere Winkel zur Längsrichtung L und zur Radiusrichtung R sind möglich und liegen im Umfang der vorliegenden Erfindung.

Die Rückstoßwirkung der ausgestoßenen Reinigungsflüssigkeit bzw. der ausgestoßenen Druckluft versetzt den Spülkopf 60 relativ zu dem Spülrohr 42 in einer Drehrichtung entgegengesetzt zu der Richtung, in die der Spülrohrkanal nach au-βen mündet, in Drehung. In der vorliegenden Ausführungsform ist dies von oben betrachtet in der Uhrzeigerrichtung. Die andere Drehrichtung ist bei entsprechender Ausgestaltung des Spülkopfes 60 ebenfalls realisierbar.

Im Bereich des Entsorgungsanschlussendes 26 bzw. des Versorgungsanschlussendes 46 ist eine Halterung 90 zur Montage der Laborgefäß-Reinigungsvorrichtung 10 an einen beliebigen Arbeitskopf eines Laborgeräts, beispielsweise einer Flüssigkeitshandhabungseinrichtung eines Chromatographen, oder an einen Roboterarm vorgesehen, sodass die Laborgefäß-Reinigungsvorrichtung der Endeffektor ist. Die Art und Weise der Befestigung der Laborgefäß-Reinigungsvorrichtung 10 wird gemäß dem die Reinigungsvorrichtung haltenden Gerät gewählt. Die veranschaulichte Halterung ist daher rein beispielhaft, und es kann auch jede andere geeignete Ausführung von Halterung zur Befestigung der Laborgefäß-Reinigungsvorrichtung 10 an dem entsprechenden Gerät gewählt werden.

Im dargestellten Ausführungsbeispiel besteht die Halterung aus einem Flansch 92, mit welchem die Spüllanze 40 drehfest verschraubt ist, und mit welchem die Sauglanze 20 derart verschraubt ist, dass diese zumindest in ihrer Längsrichtung über einen gewissen Bereich verschiebbar ist. Eine Vorspannfeder 98 spannt die Sauglanze 20 in eine ausgefahrene Stellung vor.

In Fig. 1B ist die Laborgefäß-Reinigungsvorrichtung 10 von Fig. 1A in der Stellung mit gegen die Vorspannung der Vorspannfeder 98 eingezogener Sauglanze 20 dargestellt.

Fig. 2 zeigt die Laborgefäß-Reinigungsvorrichtung 10 von Fig. 1A in einem Längsschnitt ohne verschraubten Flansch 92. Im Saugrohr 22 der Sauglanze 20 ist ein in Längsrichtung L verlaufender Saugkanal 28 ausgebildet, der eine Verbindung zwischen dem Anschluss 12 am Entsorgungsanschlussende 26 und dem Saugende 24 des Saugrohrs 22 herstellt und dort nach außen hin ausmündet. Das Saugende 24 des Saugrohrs 22 ist konkav ausgebildet, sodass es nicht, vorzugsweise nirgends, mit seinem vollen Umfang am Boden eines Laborgefäßes aufsitzen und damit das Absaugen oder Abpumpen der darin befindlichen Flüssigkeit verhindern kann.

Ein Spülkanal 48 erstreckt sich in Längsrichtung L in dem Zwischenraum zwischen dem Saugrohr 22 und dem Spülrohr 42 und verzweigt sich im Übergangsbereich zwischen Spülrohr 42 und Spülkopf 60 in mehrere einzelne Spülkopfkanäle 68. Der Spülkanal 48 durchdringt dabei die die Wandung des Spülrohrs 42 am Spülende 44. Die Spülkopfkanäle 68 verlaufen weiter durch den Spülkopf 60 unter einer Richtungsveränderung von etwa 90 Grad von der Längsrichtung L und etwa 90 Grad von einer sich senkrecht zu der Längsrichtung erstreckenden Radiuslinie R weg und münden jeweils in einer Spülöffnung 70 an einer zugehörigen Ausformung aus, die im vorliegenden Ausführungsbeispiel als Ausnehmung 64 ausgebildet ist. Die Ausnehmungen 64 sind in gleichen Abständen um den Außenumfang 62 des Spülkopfes 60 herum angeordnet. Es sind zwei Reihen von Spülöffnungen 70 und zugehörigen Spülkopfkanälen 68 in Längsrichtung L übereinander vorgesehen. Der Spülkanal 48 und die Spülkopfkanäle 68 stellen eine Verbindung zwischen dem Anschluss 14 am Versorgungsanschlussende 46 und dem Raum außerhalb der Spülöffnungen 70 her.

Der Versorgungsanschluss 14 ist am Versorgungsanschlussende 46 seitlich ausgebildet, so dass der Anschluss 14 der Spüllanze 20 und der Anschluss 12 der Sauglanze 20 frei zugänglich sind.

Die Ausführung der Anschlüsse 12, 14 an der Sauglanze 20 und der Spüllanze 40 ist nicht auf die dargestellte Ausführungsform beschränkt, sondern kann bedarfsabhängig je nach verwendeten Versorgungs- oder Entsorgungssystem umgestaltet werden.

Der Spülkopf 60 ist an dem Spülrohr 40 durch zwei in leichtem Kontakt stehende Dichtungen 80 (in Fig. 3 gezeigt besser sichtbar) drehbar gelagert. Die Befestigung des Spülkopfes 60 an dem Spülrohr 40 erfolgt auf der Seite des Spülkopfes 60 in Richtung des Versorgungsanschlussendes durch einen an dem Spülrohr 42 befestigten oder ausgebildeten Haltering 82 und auf der Seite des Spülkopfes 60 in Richtung des Spülendes 44 über einen Sprengring 84. Es dabei so viel Spiel vorgesehen, dass der Spülkopf 60 frei um das Spülrohr 42 rotieren kann. Die Befestigung ist beispielhaft und kann auch auf andere Art und Weise, beispielsweise durch zwei Sprengringe erfolgen.

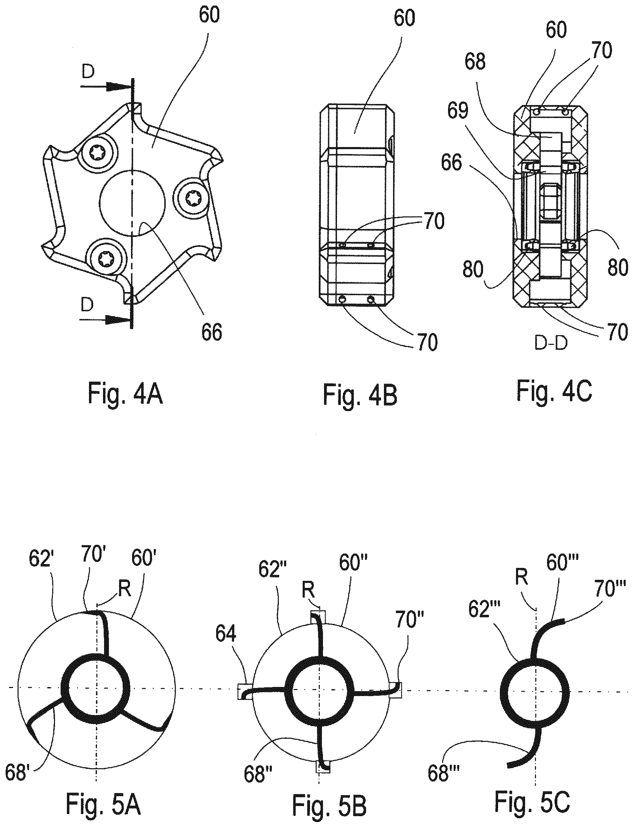

Fig. 3 zeigt in einer dreidimensionalen Darstellung den Spülkopf 60 detaillierter. Der Außenumfang 62 des Spülkopfes ist durch einen gedachten Zylinder begrenzt, der mit sechs Ausnehmungen 64 versehen ist. In der Draufsicht besitzt der Spülkopf daher eine polygonale, sternartige Form. In den Ausnehmungen 64 münden jeweils zwei übereinanderliegende Spülkanäle 68 an Spülöffnungen 70 am äußeren Randbereich einer Flanke des Polygons ins Freie aus. Insgesamt sind in der vorliegenden Ausführungsform also zwölf Spülöffnungen 70 vorgesehen. Die Anzahl der Ausnehmungen und die Anzahl der Spülöffnungen 70, letztere auch in vertikaler Richtung, kann geringer oder auch höher sein. In vertikaler Richtung reicht es aus, dass nur eine Reihe von Spülöffnungen vorgesehen ist. Die Verteilung der Ausnehmungen und Spülöffnungen kann genauso gut unregelmäßig sein. Beispielsweise können die Spülöffnungen in vertikaler Richtung voneinander verschoben sein. In der gezeigten Ausführungsform stoßen die Spülöffnungen die Reinigungsflüssigkeit in etwa parallel zu einer Tangente an die Gefäßwandung des zu reinigenden Laborgefäßes aus, wenn man von einem Gefäß mit zylindrischer Innenwand ausgeht. Darüber hinaus können die Spülöffnungen 70 selbst mit unterschiedlichen Formen versehen sein. Sie können, wie in der vorliegenden Ausführungsform, beispielsweise nach außen hin verjüngt sein, sodass sie Düsen bilden (vgl. Fig. 4C). Sie können aber auch nach außen hin aufgeweitet sein. Ebenso können Sie mit Leiteinrichtungen versehen sein, die beispielsweise einen Drall des austretenden Reinigungsflüssigkeitsstrahls bewirken. Es können auch separate Düsenelemente in die Spülöffnungen eingesetzt werden und oder die Austrittsöffnungen mit Verschleiß mindernden Beschichtungen beschichtet werden.

Durch das Zentrum des Spülkopfes 60 hindurch ist eine Bohrung 66 vorgesehen, durch welche das Spülrohr 42 bei der Montage eingeführt wird. Im Inneren des Spülkopfes 60 befindet sich eine kreisringförmige Verteilungsringaussparung 69. Über diese Verteilungsringaussparung 69 wird die über das Spülrohr 42 zugeführte Reinigungsflüssigkeit auf die einzelnen nach außen führenden Spülkopfkanäle 68 verteilt. Beidseitig der Aussparung befinden sich ringförmige Dichtungen 80. Diese Dichtungen 80 liegen im montierten Zustand des Spülkopfes 60 relativ locker an dem Spülrohr 42 an, um zu gewährleisten, dass der Spülkopfes 60 mit wenig Widerstand rotieren kann. Dabei darf durchaus etwas von der Reinigungsflüssigkeit zwischen dem Spülkopf 60 und den Dichtungen 80 hindurchtreten, da diese einerseits als Schmiermittel dient und andererseits auch nach dem Durchgang zwischen Spülkopf 60 und den Dichtungen 80 in Richtung der Laborgefäßwanderungen geschleudert wird und eine Reinigungsfunktion erfüllt.

Fig. 4A zeigt eine Draufsicht des Spülkopfes 60. Es sind drei Schraubenköpfe dargestellt, die zu Schrauben gehören, welche zwei Halbschalen miteinander verbinden, aus denen der Spülkopf 60 zusammengesetzt ist. Es liegt aber im Umfang der Erfindung, den Spülkopf 60 auf andere Weise anzufertigen. Beispielsweise könnten Halbschalen miteinander verklebt sein. Auch eine einteilige Herstellung des Spülkopfes 60 ist denkbar. Ebenso sind additive Fertigungsverfahren, wie etwa 3-D-Druck, sind in Betracht zu ziehen.

Fig. 4B ist eine Seitenansicht des Spülkopfes 60 von Fig. 4A.

Fig. 4C ist eine Seitenansicht des Spülkopfes 60 von Fig. 4A entlang der Schnittlinie D - - D von Fig. 4A. In dieser Ansicht sind die beiden Dichtungen 80 sowie die Spülkopfkanäle 68 mit der Verteilungsringaussparung 69 und die konisch verjüngten, düsenartigen Spülöffnungen 70, in die die Spülkopfkanäle 68 münden, besser sichtbar.

Fig. 5A zeigt rein schematisch eine Draufsicht eines alternativen erfindungsgemä-βen Spülkopfes 60' mit angedeuteten Spülkopfkanälen 68'. Am Außenumfang 62' des Spülkopfes 60' sind keine Aussparungen vorgesehen, jedoch münden die Spülkopfkanäle 68' ebenfalls unter einem Winkel zu einer Radiuslinie R in etwa parallel zu einer Tangente an die zu spülende Innenwand des Laborgefäßes.

Fig. 5B zeigt rein schematisch eine Draufsicht eines alternativen erfindungsgemä-βen Spülkopfes 60". Am Außenumfang 62" des Spülkopfes 60" sind als Ausformungen nach außen gerichtete Vorsprünge vorgesehen. Die Spülkopfkanäle 68" münden aber ebenfalls unter einem Winkel zu einer Radiuslinie R in etwa parallel zu einer Tangente an die zu spülende Innenwand des Laborgefäßes aus.

Fig. 5C zeigt rein schematisch eine Draufsicht eines alternativen erfindungsgemä-βen Spülkopfes 60'". Am Außenumfang 62‴ des Spülkopfes 60'", der hier einen kleineren Durchmesser als bei den anderen Ausführungsformen aufweist, sind die Spülkopfkanäle 68‴ als abgewinkelte Rohrstücke angeschlossen, beispielsweise in in dem Spülkopf 60‴ befindliche Bohrungen eingesetzt.

Die Dimensionierung erfindungsgemäßer Laborgefäß-Reinigungsvorrichtungen erfolgt gemäß den zu reinigenden Laborgefäßen. Grundsätzlich ist praktisch jede Länge und jeder Spülkopfdurchmesser denkbar. Für herkömmliche Laborgläser, in welchen beispielsweise Waste von Laborgeräten gesammelt wird, kann die Länge der Reinigungsvorrichtung 300 mm und der Spülkopfdurchmesser ca. 30 mm betragen. Wird die Reinigung von Reagenzgläsern angestrebt, können die Maße entsprechend reduziert werden.

Die Reinigungsleistung der erfindungsgemäßen Vorrichtung hängt in erster Linie von der Anzahl der Spülkanäle, dem ausgestoßenen Volumen an Reinigungsflüssigkeit und der Ausstoßgeschwindigkeit der Reinigungsflüssigkeit ab. Beispiele von geeigneten Reinigungsflüssigkeiten sind Aceton und Alkohol.

Sollten die in den zu reinigenden Laborgefäßen befindlichen Substanzen dazu neigen, an den Wänden des Laborgefäßes auszukristallisieren, ist es denkbar, an dem Spülkopfes zusätzlich Bürsten oder Schwammstrukturen zu befestigen, die mechanisch durch ihre Rotation mit dem Spülkopf auf die abgelagerten Verunreinigungen an den Gefäßwänden einwirken.

Ein Reinigungsverfahren mit der erfindungsgemäßen Laborgefäß- Reinigungsvorrichtung 10 verläuft mit den folgenden Schritten: Zunächst werden die Sauglanze 20 und die Spüllanze 40 in ein zu reinigendes Laborgefäß eingeführt. Eventuell in dem Laborgefäß vorhandene Flüssigkeiten werden aus dem Laborgefäß über die Sauglanze 20 entgegen der Wirkung der Schwerkraft, also nach oben, abgesaugt. Es wird eine Reinigungsflüssigkeit durch die Spüllanze 40 unter Druck zugeführt, so dass sie gegen die Innenwände des Laborgefäßes ausgestoßen wird, wobei der Spülkopf 60 innerhalb des Laborgefäßes relativ zu dem Laborgefäß und zu dem Spülrohr 42 durch die Rückstoßwirkung der austretenden Reinigungsflüssigkeit rotiert. Gleichzeitig wird zumindest die Spüllanze 40 innerhalb des Laborgefä-βes nach oben und nach unten bewegt und die sich im Laborgefäß unten sammelnde Reinigungsflüssigkeit wird über die Sauglanze 20 entgegen der Wirkung der Schwerkraft nach oben abgesaugt. Dieser Vorgang wird gegebenenfalls mehrmals wiederholt, bis der angestrebte Reinheitsgrad des Laborgefäßes erreicht ist.

Zusätzlich oder alternativ kann auch ein Laborgefäß-Trocknungsverfahren mittels der gleichen Laborgefäß-Reinigungsvorrichtung 10 durchgeführt werden. Dabei werden die Spüllanze 40 und die Sauglanze 20 in ein zu trocknendes Laborgefäß eingeführt oder, wenn sie sich bereits darin befinden, in diesem belassen. Daraufhin wird Druckluft durch die Spüllanze 40 zugeführt, so dass diese gegen die vertikalen Innenwände des Laborgefäßes ausgestoßen wird. Gleichzeitig wird zumindest die Spüllanze 40 innerhalb des Laborgefäßes vertikal angehoben und abgesenkt, wobei dies auch mehrfach vorgenommen werden kann. Gegebenenfalls wird auch sich im Laborgefäß unten befindliche Flüssigkeit über die Sauglanze 20 entgegen der Wirkung der Schwerkraft abgesaugt.

### Bezugszeichenliste

- 10: Laborgefäß-Reinigungsvorrichtung
- 12: Anschluss an Entsorgungsanschlussende
- 14: Anschluss an Versorgungsanschlussende
- 20: Sauglanze
- 22: Saugrohr
- 24: Saugende
- 26: Entsorgungsanschlussende
- 28: Saugkanal
- 40: Spüllanze
- 42: Spülrohr
- 44: Spülende
- 46: Versorgungsanschlussende
- 48: Spülkanal
- 60, 60', 60", 60‴: Spülkopf
- 62, 62', 62", 62‴: Außenumfang Spülkopf
- 64: Ausformung
- 66: Bohrung
- 68, 68', 68", 68‴: Spülkopfkanal
- 69: Verteilungsringaussparung
- 70, 70', 70", 70‴: Spülöffnung
- 80: Dichtung
- 82: Haltering
- 84: Sprengring
- 90: Halterung
- 92: Flansch
- 98: Vorspannfeder
- L: Längsrichtung
- R: Radiuslinie

## Patentansprüche

1. Gefäß-Reinigungsvorrichtung, insbesondere Laborgefäß-Reinigungsvorrichtung (10) mit einer Sauglanze (20) und einer Spüllanze (40), die sich in einer Längsrichtung (L) erstrecken,
wobei die Sauglanze (20) ein Saugrohr (22) mit einem offenen Saugende (24) aufweist, das über einen in dem Saugrohr (22) durchgängig ausgebildeten Saugkanal (28) mit einem entgegengesetzt zum Saugende (24) angeordneten Entsorgungsanschlussende (26) verbunden ist, wobei die Sauglanze (20) dazu ausgebildet ist, an ihrem Saugende (24) Fluid aus einem Gefäß, insbesondere einem Laborgefäß, vorzugsweise entgegen der Wirkungsrichtung der Schwerkraft, abzusaugen und an ihrem Entsorgungsanschlussende (26) abzuführen,
wobei die Spüllanze (40) ein Spülrohr (42) mit einem Spülende (44) aufweist, das über einen in dem Spülrohr (42) durchgängig ausgebildeten Spülkanal (48) mit einem entgegengesetzt zum Spülende (44) angeordneten Versorgungsanschlussende (46) verbunden ist, wobei die Spüllanze (40) dazu ausgebildet ist, an ihrem Versorgungsanschlussende (46) Fluid, wie etwa Reinigungsflüssigkeit und/oder Druckluft, aufzunehmen, und an ihrem Spülende (44) auszustoßen,
**dadurch gekennzeichnet, dass**
die Sauglanze (20) und die Spüllanze (40) relativ zueinander in Längsrichtung verschiebbar und durch eine Vorspannfeder (98) in Längsrichtung voneinander weg vorgespannt sind.

2. Vorrichtung (10) nach Anspruch 1,
wobei das Saugrohr (22) konzentrisch und beabstandet in dem Spülrohr (42) angeordnet ist.

3. Vorrichtung (10) nach Anspruch 1 oder Anspruch 2,
wobei die Spüllanze (40) einen Spülkopf (60) am Spülende (44) des Spülrohrs (40) aufweist, in welchem sich der Spülkanal (48) unter einer Richtungsveränderung von der Längsrichtung (L) weg als Spülkopfkanal (68) erstreckt und an einem Außenumfang (62) des Spülkopfes (60) an einer vorzugsweise als Düse ausgebildeten Spülöffnung (70) ausmündet.

4. Vorrichtung (10) nach Anspruch 3,
wobei der Spülkopf (60) polygonförmig, insbesondere sternförmig ausgebildet ist, und die vorzugsweise als Düse ausgebildete Spülöffnung (70) in einem äußeren Randbereich radial innen von dem Außenumfang (62) des polygonförmig, insbesondere sternförmig ausgebildeten Spülkopfes (60) angeordnet ist.

5. Vorrichtung (10) nach Anspruch 3 oder Anspruch 4,
wobei der Spülkanal (48) sich in dem Spülkopf (60) in zumindest zwei Spülkopfkanäle (68) verzweigt, die jeweils an dem Außenumfang des Spülkopfes (60) an einer zugehörigen Spülöffnung (70), vorzugsweise zwölf Spülöffnungen (70), ausmünden.

6. Vorrichtung (10) nach einem der Ansprüche 3 bis 5,
wobei an dem Außenumfang (62) des Spülkopfes (60) eine Ausformung (64), vorzugsweise eine radiale Ausnehmung vorgesehen ist, in welcher der Spülkopfkanal (68) ausmündet.

7. Vorrichtung (10) nach einem der Ansprüche 3 bis 6,
wobei der Spülkopf (60) drehbar ist, vorzugsweise an dem Spülrohr (22) drehbar befestigt ist, bevorzugt
wobei der Spülkopf (60) drehbar angetrieben ist, insbesondere wobei der Spülkopfkanal (68) aus dem Spülkopf (60) unter einem Winkel, vorzugsweise einem Winkel von etwa 90 Grad, zu einer Radiallinie (R) des Spülkopfes (60) ausmündet und der Spülkopf (60) durch Rückstoß austretenden Fluids in Drehung versetzt wird.

8. Vorrichtung (10) nach einem der Ansprüche 6 bis 7,
wobei der Spülkopf (60) an dem Spülrohr (40) durch Dichtungen (80) drehbar gelagert ist, wobei vorzugsweise ein Spiel zwischen Dichtung (80) und Spülrohr (40) oder Dichtung (80) und Spülkopf (60) besteht.

9. Vorrichtung (10) nach einem der vorhergehenden Ansprüche,
wobei das Saugende (24) des Saugrohrs (22) nicht plan, vorzugsweise konkav, konvex oder abgeschrägt ausgebildet ist.

10. Vorrichtung (10) nach einem der vorhergehenden Ansprüche,
wobei im Bereich des Spülendes (44) eine mechanische Reinigungsvorrichtung, wie etwa eine Bürste, vorgesehen ist.

11. Anordnung aus einer oder mehreren Gefäß-Reinigungsvorrichtungen (10) nach einem der Ansprüche 1 bis 10 an einem Arbeitskopf einer Flüssigkeitshandhabungsvorrichtung zur parallelen Reinigung und/oder Trocknung mehrerer, insbesondere in Racks vorgesehener Gefäße, insbesondere Laborgefäße.

12. Anordnung aus einer oder mehreren Gefäß-Reinigungsvorrichtungen (10) nach einem der Ansprüche 1 bis 10 an einer spezifischen Reinigungsstation zur parallelen Reinigung und/oder Trocknung mehrerer, insbesondere in Racks vorgesehener Gefäße, insbesondere Laborgefäße.

13. Gefäß-Reinigungsverfahren, insbesondere Laborgefäß-Reinigungsverfahren, mittels einer Gefäß-Reinigungsvorrichtung (10) nach einem der Ansprüche 1 bis 10 und/oder einer Anordnung nach einem der Ansprüche 11 und 12, mit den Schritten,
Einführen der Sauglanze (20) in ein zu reinigendes Gefäß, insbesondere Laborgefäß,
gegebenenfalls Absaugen im Gefäß vorhandener Flüssigkeiten aus dem Gefäß über die Sauglanze (20), vorzugsweise entgegen der Wirkung der Schwerkraft,
Einführen der Spüllanze (40) in das zu reinigende Gefäß gleichzeitig oder im Anschluss an das Einführen der Sauglanze (20),
Zuführen einer Reinigungsflüssigkeit durch die Spüllanze (40), so dass sie zumindest gegen vertikale Innenwände des Gefäßes ausgestoßen wird, und gleichzeitig vertikales Verfahren zumindest der Spüllanze (40) innerhalb des Gefäßes und Absaugen der sich im Gefäß unten sammelnden Reinigungsflüssigkeit über die Sauglanze (20), vorzugsweise entgegen der Wirkung der Schwerkraft, bevorzugt mit dem Schritt:
Drehen des Spülkopfes (60) der Spüllanze (40) innerhalb des Gefäßes relativ zu dem Gefäß; und/oder
mit den Schritten:
mehrmaliges vertikales Anheben und Absenken zumindest der Spüllanze (40) innerhalb des Gefäßes bis zum Erreichen eines gewünschten Reinheitsgrades des Gefäßes.

14. Gefäß-Trocknungsverfahren, insbesondere Laborgefäß-Trocknungsverfahren mittels einer Gefäß-Reinigungsvorrichtung, insbesondere Laborgefäß-Reinigungsvorrichtung (10), nach einem der Ansprüche 1 bis 10 und/oder einer Anordnung nach einem der Ansprüche 11 und 12, mit den Schritten:
Einführen der Spüllanze (40) und der Sauglanze (20) in ein zu trocknendes Gefäß, insbesondere Laborgefäß oder Belassen der Spüllanze (40) und der Sauglanze (20) in einem gerade gereinigten Gefäß, insbesondere Laborgefäß,
Zuführen von Luft durch die Spüllanze (40), so dass die Luft zumindest gegen vertikale Innenwände des Gefäßes ausgestoßen wird, und gleichzeitig, optional mehrmaliges, vertikales Anheben und Absenken zumindest der Spüllanze (40) innerhalb des Gefäßes und optional Absaugen von sich gegebenenfalls im Gefäß unten befindlicher Flüssigkeit über die Sauglanze (20), vorzugsweise entgegen der Wirkung der Schwerkraft.

## Claims

1. A vessel cleaning apparatus, in particular a laboratory vessel cleaning apparatus (10), comprising a suction lance (20) and a flushing lance (40) which extend in a longitudinal direction (L),
wherein the suction lance (20) has a suction tube (22) having an open suction end (24) that is connected to a disposal connection end (26), which is arranged opposite the suction end (24), via a suction passage (28) formed continuously in the suction tube (22), wherein the suction lance (20) is configured to suck off fluid from a vessel, in particular from a laboratory vessel, at its suction end (24), preferably against the direction of effect of gravity, and to lead it off at its disposal connection end (26),
wherein the flushing lance (40) has a flushing tube (42) having a flushing end (44) that is connected to a supply connection end (46), which is arranged opposite the flushing end (44), via a flushing passage (48) formed continuously in the flushing tube (42), wherein the flushing lance (40) is configured to receive fluid, such as cleaning liquid and/or compressed air, at its supply connection end (46) and to expel it at its flushing end (44),
**characterized in that**
the suction lance (20) and the flushing lance (40) are displaceable relative to one another in the longitudinal direction and are preloaded away from one another in the longitudinal direction by a preload spring (90).

2. An apparatus (10) according to claim 1,
wherein the suction tube (22) is arranged concentrically and spaced apart in the flushing tube (42).

3. An apparatus (10) according to claim 1 or claim 2,
wherein the flushing lance (40) has a flushing head (60) at the flushing end (44) of the flushing tube (40), in which flushing head (60) the flushing passage (48) extends as a flushing head passage (68) while changing direction away from the longitudinal direction (L) and leads to a flushing opening (70), preferably formed as a nozzle, at an outer periphery (62) of the flushing head (60).

4. An apparatus (10) according to claim 3,
wherein the flushing head (60) is polygonal, in particular star-shaped, and the flushing opening (70), preferably formed as a nozzle, is arranged in an outer marginal region radially inwardly of the outer periphery (62) of the polygonal flushing head (60) which is in particular star-shaped.

5. An apparatus (10) according to claim 3 or claim 4,
wherein, in the flushing head (60), the flushing passage (48) branches into at least two flushing head passages (68) which each lead to an associated flushing opening (70), preferably twelve flushing openings (70), at the outer periphery of the flushing head (60).

6. An apparatus (10) according to any one of the claims 3 to 5,
wherein a structure (64), preferably a radial recess, into which the flushing head passage (68) leads, is formed at the outer periphery (62) of the flushing head (60).

7. An apparatus (10) according to any one of the claims 3 to 6,
wherein the flushing head (60) is rotatable, preferably rotatably fastened to the flushing tube (22), preferably
wherein the flushing head (60) is rotatably driven, in particular wherein the flushing head passage (68) leads from the flushing head (60) at an angle, preferably at an angle of approximately 90 degrees, to a radial line (R) of the flushing head (60) and the flushing head (60) is set into rotation by a recoil of exiting fluid.

8. An apparatus (10) according to one of the claims 6 to 7,
wherein the flushing head (60) is rotatably supported at the flushing tube (40) by seals (80), wherein there is preferably a clearance between the seal (80) and the flushing tube (40) or between the seal (80) and the flushing head (60).

9. An apparatus (10) according to any one of the preceding claims,
wherein the suction end (24) of the suction tube (22) is non-planar, preferably concave, convex or chamfered.

10. An apparatus (10) according to any one of the preceding claims,
wherein a mechanical cleaning apparatus, such as a brush, is provided in a region of the flushing end (44).

11. An arrangement of one or more vessel cleaning apparatus (10) according to any one of the claims 1 to 10 at a working head of a liquid handling apparatus for a parallel cleaning and/or drying of a plurality of vessels, which are in particular provided in racks, in particular of laboratory vessels.

12. An arrangement of one or more vessel cleaning apparatus (10) according to any one of the claims 1 to 10 at a specific cleaning station for a parallel cleaning and/or drying of a plurality of vessels, which are in particular provided in racks, in particular of laboratory vessels.

13. A vessel cleaning method, in particular a laboratory vessel cleaning method, by means of a vessel cleaning apparatus (10) according to any one of the claims 1 to 10 and/or by means of an arrangement according to one of the claims 11 and 12,
comprising the steps
introducing the suction lance (20) into a vessel to be cleaned, in particular into a laboratory vessel;
if applicable, sucking off liquids present in the vessel from the vessel via the suction lance (20), preferably against the effect of gravity;
introducing the flushing lance (40) into the vessel to be cleaned at the same time as or subsequently to the introduction of the suction lance (20);
supplying a cleaning liquid through the flushing lance (40) so that it is at least expelled toward vertical inner walls of the vessel; and simultaneously vertically moving at least the flushing lance (40) within the vessel and sucking off the cleaning liquid collecting at the bottom of the vessel via the suction lance (20), preferably against the effect of gravity, preferably comprising the step:
rotating the flushing head (60) of the flushing lance (40) within the vessel relative to the vessel; and/or
comprising the steps:
repeatedly vertically raising and lowering at least the flushing lance (40) within the vessel up to the reaching of a desired degree of purity of the vessel.

14. A vessel drying method, in particular a laboratory vessel drying method, by means of a vessel cleaning apparatus, in particular by means of a laboratory vessel cleaning apparatus (10), according to any one of the claims 1 to 10 and/or by means of an arrangement according to one of the claims 11 and 12, comprising the steps:
introducing the flushing lance (40) and the suction lance (20) into a vessel to be dried, in particular into a laboratory vessel, or leaving the flushing lance (40) and the suction lance (20) in a vessel which has just been cleaned, in particular in a laboratory vessel;
supplying air through the flushing lance (40) so that the air is at least expelled toward vertical inner walls of the vessel; and simultaneously, optionally repeatedly, vertically raising and lowering at least the flushing lance (40) within the vessel and optionally sucking off liquid possibly present at the bottom of the vessel via the suction lance (20), preferably against the effect of gravity.

## Revendications

1. Dispositif de nettoyage de récipients, en particulier dispositif de nettoyage de récipients de laboratoire (10), comportant une lance d'aspiration (20) et une lance de rinçage (40), qui s'étendent dans une direction longitudinale (L),
dans lequel
la lance d'aspiration (20) comprend un tube d'aspiration (22) ayant une extrémité d'aspiration ouverte (24) qui, par l'intermédiaire d'un canal d'aspiration (28) formé de manière continue dans le tube d'aspiration (22), est reliée à une extrémité de raccordement d'évacuation (26) disposée à l'opposé de l'extrémité d'aspiration (24), la lance d'aspiration (20) étant conçue pour aspirer à son extrémité d'aspiration (24) un fluide hors d'un récipient, en particulier d'un récipient de laboratoire, de préférence en sens opposé à la direction de l'effet de la gravité, et pour l'évacuer à son extrémité de raccordement d'évacuation (26),
la lance de rinçage (40) comprend un tube de rinçage (42) ayant une extrémité de rinçage (44) qui, par l'intermédiaire d'un canal de rinçage (48) formé de manière continue dans le tube de rinçage (42), est reliée à une extrémité de raccordement d'alimentation (46) disposée à l'opposé de l'extrémité de rinçage (44), la lance de rinçage (40) étant conçue pour recevoir un fluide, tel qu'un liquide de nettoyage et/ou de l'air comprimé, à son extrémité de raccordement d'alimentation (46), et pour l'expulser à son extrémité de rinçage (44),
**caractérisé en ce que**
la lance d'aspiration (20) et la lance de rinçage (40) peuvent être déplacées l'une par rapport à l'autre dans la direction longitudinale et sont précontraintes par un ressort de précontrainte (98) pour s'éloigner l'une de l'autre dans la direction longitudinale.

2. Dispositif (10) selon la revendication 1,
dans lequel le tube d'aspiration (22) est disposé de manière concentrique et espacée dans le tube de rinçage (42).

3. Dispositif (10) selon la revendication 1 ou la revendication 2,
dans lequel la lance de rinçage (40) comprend une tête de rinçage (60) à l'extrémité de rinçage (44) du tube de rinçage (40), dans laquelle le canal de rinçage (48) s'étend sous forme de canal de tête de rinçage (68) en s'éloignant de la direction longitudinale (L) avec un changement de direction et débouche sur une périphérie extérieure (62) de la tête de rinçage (60) au niveau d'une ouverture de rinçage (70), réalisée de préférence sous forme de buse.

4. Dispositif (10) selon la revendication 3,
dans lequel la tête de rinçage (60) est conçue en forme de polygone, en particulier en forme d'étoile, et l'ouverture de rinçage (70), réalisée de préférence sous forme de buse, est disposée dans une zone de bordure extérieure radialement à l'intérieur de la périphérie extérieure (62) de la tête de rinçage (60) conçue en forme de polygone, en particulier en forme d'étoile.

5. Dispositif (10) selon la revendication 3 ou la revendication 4,
dans lequel le canal de rinçage (48) se ramifie dans la tête de rinçage (60) en au moins deux canaux de tête de rinçage (68) qui débouchent chacun sur la périphérie extérieure de la tête de rinçage (60) au niveau d'une ouverture de rinçage (70) associée, de préférence au niveau de douze ouvertures de rinçage (70).

6. Dispositif (10) selon l'une des revendications 3 à 5,
dans lequel est prévue, sur la périphérie extérieure (62) de la tête de rinçage (60), une conformation (64), de préférence un évidement radial, dans lequel débouche le canal de tête de rinçage (68).

7. Dispositif (10) selon l'une des revendications 3 à 6,
dans lequel la tête de rinçage (60) est rotative, de préférence est fixée de manière rotative au tube de rinçage (22), de préférence la tête de rinçage (60) est entraînée en rotation, en particulier le canal de tête de rinçage (68) débouche de la tête de rinçage (60) selon un angle, de préférence un angle d'environ 90 degrés, par rapport à une ligne radiale (R) de la tête de rinçage (60), et la tête de rinçage (60) est mise en rotation par le contrecoup du fluide sortant.

8. Dispositif (10) selon l'une des revendications 6 à 7,
dans lequel la tête de rinçage (60) est montée de façon mobile en rotation sur le tube de rinçage (40) par des joints d'étanchéité (80), un jeu existant de préférence entre le joint d'étanchéité (80) et le tube de rinçage (40) ou entre le joint d'étanchéité (80) et la tête de rinçage (60).

9. Dispositif (10) selon l'une des revendications précédentes,
dans lequel l'extrémité d'aspiration (24) du tube d'aspiration (22) est non plane, de préférence concave, convexe ou biseautée.

10. Dispositif (10) selon l'une des revendications précédentes,
dans lequel un dispositif de nettoyage mécanique, tel qu'une brosse, est prévu dans la zone de l'extrémité de rinçage (44).

11. Ensemble constitué d'un ou de plusieurs dispositifs de nettoyage de récipients (10) selon l'une des revendications 1 à 10 sur une tête de travail d'un dispositif de manipulation de liquides pour le nettoyage et/ou le séchage en parallèle de plusieurs récipients, en particulier de récipients de laboratoire, prévus dans des racks.

12. Ensemble constitué d'un ou de plusieurs dispositifs de nettoyage de récipients (10) selon l'une des revendications 1 à 10 sur une station de nettoyage spécifique pour le nettoyage et/ou le séchage en parallèle de plusieurs récipients, en particulier de récipients de laboratoire, prévus dans des racks.

13. Procédé de nettoyage de récipients, en particulier procédé de nettoyage de récipients de laboratoire, au moyen d'un dispositif de nettoyage de récipients (10) selon l'une des revendications 1 à 10 et/ou d'un ensemble selon l'une des revendications 11 et 12,
comprenant les étapes consistant à :
introduire la lance d'aspiration (20) dans un récipient à nettoyer, en particulier un récipient de laboratoire,
le cas échéant, aspirer des liquides, présents dans le récipient, hors du récipient via la lance d'aspiration (20), de préférence à l'encontre de l'effet de la gravité,
introduire la lance de rinçage (40) dans le récipient à nettoyer, simultanément ou à la suite de l'introduction de la lance d'aspiration (20),
alimenter un liquide de nettoyage à travers la lance de rinçage (40) de manière à ce qu'il soit éjecté au moins contre des parois intérieures verticales du récipient, et simultanément déplacer verticalement au moins la lance de rinçage (40) à l'intérieur du récipient, et aspirer le liquide de nettoyage s'accumulant en bas dans le récipient par l'intermédiaire de la lance d'aspiration (20), de préférence à l'encontre de l'effet de la gravité,
de préférence comprenant l'étape consistant à :
faire tourner la tête de rinçage (60) de la lance de rinçage (40) par rapport au récipient, à l'intérieur du récipient ; et/ou
comprenant les étapes consistant à :
soulever et abaisser verticalement à plusieurs reprises au moins la lance de rinçage (40) à l'intérieur du récipient jusqu'à ce qu'un degré de propreté souhaité du récipient soit atteint.

14. Procédé de séchage de récipients, en particulier procédé de séchage de récipients de laboratoire au moyen d'un dispositif de nettoyage de récipients, en particulier au moyen d'un dispositif de nettoyage de récipients de laboratoire (10) selon l'une des revendications 1 à 10 et/ou d'un ensemble selon l'une des revendications 11 et 12, comprenant les étapes consistant à :
introduire la lance de rinçage (40) et la lance d'aspiration (20) dans un récipient, en particulier un récipient de laboratoire, à faire sécher, ou laisser la lance de rinçage (40) et la lance d'aspiration (20) dans un récipient, en particulier un récipient de laboratoire, qui vient d'être nettoyé,
alimenter de l'air à travers la lance de rinçage (40), de sorte que l'air soit éjecté au moins contre des parois intérieures verticales du récipient, et simultanément, en option plusieurs fois, soulever et abaisser verticalement au moins la lance de rinçage (40) à l'intérieur du récipient, et, en option, aspirer par la lance d'aspiration (20) le liquide qui se trouve éventuellement en bas dans le récipient, de préférence à l'encontre de l'effet de la gravité.
